# EUROPEAN PATENT SPECIFICATION

(11) **EP 0 723 884 B1**
(45) Date of publication and mention of the grant of the patent: **25.07.2001**
(21) Application number: 95203570.7
(22) Date of filing: 28.12.1995
(51) Int. Cl.: B60C 9/08, B60C 9/00

(54) **A pneumatic tire and an unvulcanized carcass as an intermediate article in its manufacture**
Ein Luftreifen und eine unvulkanisierte Karkasse als Zwischenprodukt in seiner Herstellung
Un bandage pneumatique et une carcasse non vulcanisée utilisée comme article intermédiaire lors de sa fabrication

(30) Priority: 05.01.1995 US 369026
(43) Date of publication of application: 31.07.1996
(73) Proprietor: THE GOODYEAR TIRE & RUBBER COMPANY, Akron, Ohio 44316-0001 (US)
(72) Inventor: Benzing II, James Alfred, Stow, OH 44224 (US); Downing, Daniel Ray, Uniontown, OH 44685 (US); Head, William James, Ravenna, OH 44266 (US)
(74) Representative: Leitz, Paul

(56) References cited:
- EP-A- 0 409 997
- LU-A- 41 755
- PATENT ABSTRACTS OF JAPAN vol. 014, no. 583 (M-1064), 26 December 1990 & JP 02 253932 A (TOYO TIRE & RUBBER CO LTD), 12 October 1990,

## Description

### Background of the Invention

This invention relates to a radial ply pneumatic tire and to a cylindrical carcass 10 for the pneumatic tire as an intermediate article of manufacture. The carcass 10 in its unvulcanized state is formed into a cylindrical shape at a tire building station and is a subassembly of a radial ply pneumatic tire. The invention is described in relation to a radial ply passenger tire, but it is applicable to light truck medium truck, agricultural, off-road and other radial ply tire constructions.

Historically, the pneumatic tire has been fabricated as a laminate structure of generally toroidal shape having beads, a tread, belt reinforcement and a carcass. The tire is made of rubber, fabric, and steel. The manufacturing technologies employed for the most part involve assembling the many tire components from flat strips or sheets of material. Each component is placed on a building drum and cut to length such that the ends of a component meet or overlap creating a splice. LU-A- 41 755, considered closest prior art, discloses a cord reinforced carcass ply according to the preamble of claim 1.

In the first stage of assembly the carcass would include one or more plies, and a pair of sidewalls, a pair of apexes, an innerliner (for a tubeless tire), a pair of chafers and perhaps a pair of gum shoulder strips. Annular bead cores can be added during this first stage of tire building, and the ply or plies can be turned around the bead cores to form the "ply turnups."

The carcass components (excluding the bead cores) would be either "butt spliced" or "lap spliced." A butt splice has the component ends joined but not overlapped, a lap splice has overlapping ends.

This intermediate article of manufacture would be cylindrically formed at this point in the first stage of assembly. The cylindrical carcass is expanded into a toroidal shape after completion of the first-stage of tire building that results in such cylindrical intermediate article of manufacture. Reinforcing belts and the tread are added to the intermediate article during a second stage of tire manufacture, which can occur using the same building drum or work station.

During the expansion of the carcass, tensile stresses are imposed on the spliced and uncured components of the tire carcass.

In the case of plies, lap splices were preferred because the splice remained intact whereas butt splices would tend to open or fail. Even with the good adhesion of the lap splice the cords adjacent the splice tended to be stretched compensating for the overlapped two layers of cords at the splice. This localized stretching creates a non-uniformity that is readily visible under x-ray or ultrasonic display.

The tire builder, in order to prevent the creation of tire uniformity problems has historically insured that the splices of the various layers of components were not circumferentially aligned. This non-alignment of splice joints was believed to improve the carcass overall durability, as measured by the ultimate burst strength of the tire. Tire engineers also have believed that tire uniformity could be improved if these discontinuities were deliberately circumferentially spaced around the carcass.

The subject matter of this patent application completely reverses this conventional wisdom as it relates to carcass construction. The carcass is manufactured with numerous components having a common splice line. The tire carcass built according to claim 1 of the present invention can actually increase the tire burst strength while reducing splice-related nonuniformities.

### Summary of the Invention

A radial ply pneumatic tire 100 and a cylindrical or toroidal unvulcanized carcass 10 for the radial ply pneumatic tire, as an intermediate article of manufacture, is disclosed. The carcass 10 has a ply 20 and at least two components attached to the ply 20, the components being selected from one or more of the component types consisting of an apex 30, a chafer 60, a liner 50, a sidewall 70, a whitewall strip 80, a cover strip 90 and a gum shoulder strip 40. The ply 20 has a width (W_{P}), a pair of ends 12,14, the distance between the ends defining the ply length (L). The ply 20 is made from unvulcanized rubber 24 reinforced with cords 22, the cords 22 being oriented at an angle between 65° and 90° relative to the ply length (L).

The ply 20 and the components are laminated to one another and have common ends 12,14 spliced along a substantially flat plane (P), the plane (P) extending through the article across its axial width (W) substantially parallel to the cords 22 of the ply 20. The splice or flat plane (P) is inclined at an angle **θ**, **θ** being less than 90° and greater than 60° relative to a normal plane (NP) passing through the ply and extending parallel to the cords 22 and perpendicular to the ply 20. In a preferred embodiment of the invention the splice or flat plane (P) is inclined at an angle θ of about 80°. This orientation of the splice permits the ends 12,14 to have large surface areas which upon assembly greatly increases adhesion of the joint. For manufacturing efficiency and improved product quality it is ideally that the ply 20 and each of the components listed above in the quantities required to assembly the carcass be spliced along a straight linear surface as described above. If, however, the carcass is to include two or more cord-reinforced plies, with the cords in adjacent plies oppositely oriented at angles not precisely normal to length (L), then one of the plies at least may have to be laminated to the carcass in a separate operation.

### Brief Description of the Drawings

**Figure 1** illustrates one half of the carcass subassembly cross section as taken along lines 1-1 of Figure 2A prior to being formed cylindrically upon a tire building drum, the building drum not illustrated.

**Figure 2A** is a partial plan view of the carcass's inner surface with components attached.

**Figure 2B** is a partial plan view of the carcass's outer surface with components attached, both views Fig. 2A and Fig. 2B being slightly inclined to depict the ends 12 and 14.

**Figure 3** is an enlarged transverse view of the carcass end 12 taken along lines 3-3 of Figure 2A.

**Figure 4** is an enlarged transverse view of the opposite carcass end 14 taken along line 4-4 of Figure 2A.

**Figure 5** is a partial view of the carcass depicting the splice joint of the carcass prior to its being toroidally expanded.

**Figure 6** is a partial view of the carcass, depicting the splice, after the carcass has been cylindrically formed on a toroidal drum 5.

**Figure 7A and 7B** are perspective views of the carcass cylindrically formed on a building drum.

**Figure 7C** is a cross-sectional view of the carcass after being expanded and toroidally formed.

**Figure 7D** is a cross-sectional view of a tire made with the carcass.

**Figure 8A** is an illustration of the apparatus used to form and assemble the carcass absent the apex.

**Figure 8B** is an illustration of the apparatus employed to form and assemble the carcass with apex.

### Definitions

"Apex" means an elastomeric filler located radially above the bead and interposed between the plies and the ply turnup.

"Axial" and "axially" means the lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt Structure" means at least two annular layers or plies of parallel cords, woven or unwoven, underlying the tread, unanchored to the bead, and having both left and right cord angles in the range from 17° to 27° with respect to the equatorial plane of the tire.

"Circumferential" means lines or directions extending along the perimeter of the surface of the annular tread perpendicular to the axial direction.

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Chafers" refers to narrow strips of material placed around the outside of the bead to protect cord plies from the rim, distribute flexing above the rim, and to seal the tire.

"Cord" means one of the reinforcement filaments, cable,s or strands of which the plies in the tire are comprised.

"Equatorial plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Ply" means a continuous layer of rubber-coated parallel cords.

"Radial" and "radially" mean directions radially toward or away from the axis of rotation of the tire.

"Radial ply tire" means a belted or circumferentially-restricted pneumatic tire in which the ply cords which extend from bead to bead are laid at cord angles between 65° and 90° with respect to the equatorial plane of the tire.

"Section height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Shoulder gum strip" means an elastomeric reinforcement located in the shoulder region of the carcass.

"Sidewall" means that elastomeric portion of a tire between the tread and the bead.

"Tread" means a rubber component which when bonded to a tire carcass includes that portion of the tire that come into contact with the road when the tire is normally inflated and under normal load.
"Tread width" means the arc length of the tread surface in the axial direction, that is, in a plane parallel to the axis of rotation of the tire.

### Detailed description of the Preferred Embodiment

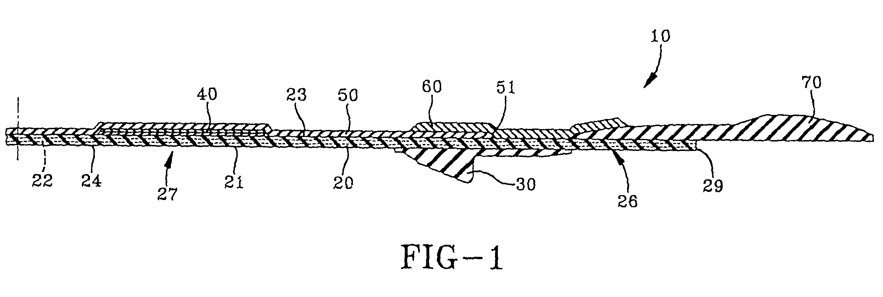

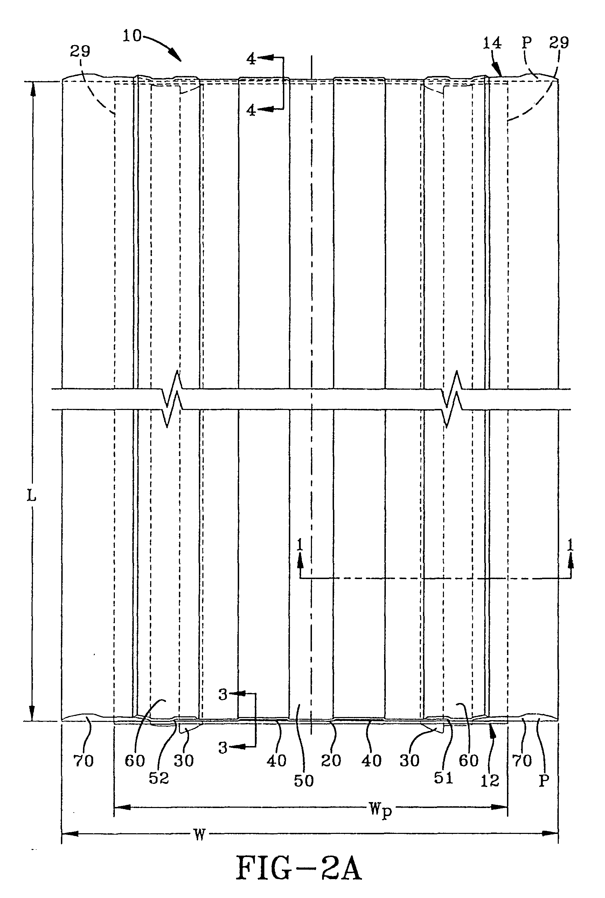

Referring to Figs. 1, 2 and 3 there is illustrated an intermediate article of manufacture made in accordance with the present invention. The intermediate article of manufacture is a carcass 10 for a pneumatic tire 100.

Fig. 1 illustrates the intermediate article of manufacture 10, the article being a tire carcass 10. The figure shows the carcass 10 as a flat laminate composite structure having first and second longitudinal ends and comprising many components. As shown all of the components are either sheets or strips of material of substantially the same length. Each component shown is precisely located laterally relative to one another. The method and apparatus 200 for producing and cutting this laminated structure is disclosed in concurrently filed and co-pending U.S. Patent Applications S.N. **08/369,211** and **08/369,192** respectively, entitled "METHOD AND APPARATUS FOR CUTTING A CORD REINFORCED ELASTOMERIC LAMINATE" AND "A METHOD AND APPARATUS FOR BUILDING A LAMINATE AND FORMING A CARCASS FOR TIRE FROM AN ASSEMBLY OF TIRE COMPONENTS" (see corresponding documents EP-A-0737564 and EP-A-0740999).

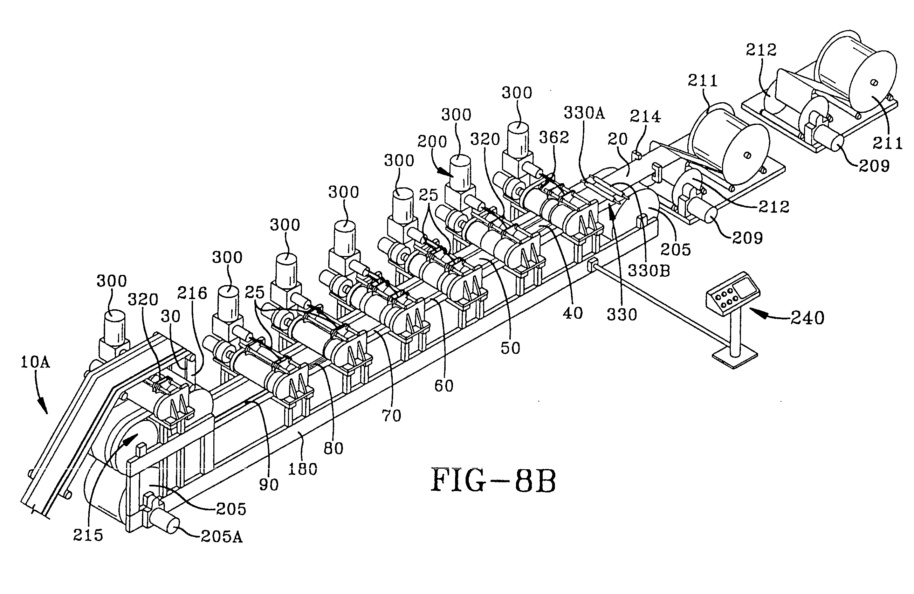

The carcass material 10A when manufactured by the apparatus 200 as shown in Figs. 8A or 8B can be made into continuous rolls 210. the carcass material 10A prior to cutting is then, in its preassembled state, preferably stored in large rolls 210 which when sent to a tire building station are cut to a precise length (L) by a unique cutting apparatus. The cut to length carcass 10 is then formed into a cylindrical shape as described later in this patent application.

Fig. 1 depicts a ply 20, the ply being reinforced with parallel cords 22 which are encapsulated in unvulcanized rubber 24 and which are oriented at an angle of 65° to 90° relative to the length (L); preferably, an angle of 90° is used for the cords of a tire having only one ply extending from bead-to-bead. The ply 20 has a width (Wₚ) and length (L). The ply 20 has a pair of turn-up portions 26 located at the lateral extremes of the ply 20. Attached to an outer surface 21 of the ply 20 is a pair of apexes 30. The apexes 30 are located on the ply in the turnup region 26 and are positioned to wrap about and primarily above a bead at a later assembly station. The bead tensile member preferably employed is of the cable bead type.

Axially inward of the apexes and attached to an inner surface 23 of the ply 20 is a pair of shoulder gum strips 40. The shoulder gum strip acts as a rubber reinforcement in the shoulder portion 27 of the carcass 10.

A liner component 50 is attached to the ply and over the shoulder gum strips 40. The liner 50 creates an air impervious barrier for the radially inner air chamber of the tubeless type tire. The liners are generally comprised of halobutyl rubber. The liner 50 has an axial width narrower than the ply 20. The liner width is sufficient to traverse axially outward of the beads when the tire is toroidally shaped, thus forming an air tight chamber between the tire 100 and the wheel upon assembly.

A chafer component 60 is shown at each lateral end 51,52 of the liner 50. The chafer 60 is attached to the liner 50, to the inner surface 23 of the ply 20 and slightly overlaps a sidewall component 70. The chafer 60 is positioned axially to provide a tough rubber reinforcement between the tire 100 and the rim flange of the wheel and is accordingly located in the bead region of the finished tire.

A sidewall component 70 is shown attached to the ply and extends laterally outward of the lateral ends 29 of the ply 20. The sidewalls 70 are slightly overlapped by the chafers 60.

Optionally, to build an outlined white letter tire or a whitewall tire, a whitewall strip 80 and a cover strip 90 may be added to the carcass material 10A as shown in Fig. 8A and Fig. 8B.

It is believed preferable in cases where a non-cable bead is used in the tire construction that the apex be added at a latter stage as shown in the apparatus 200 of Fig. 8A. This enables the carcass material 10A to be wound into large rolls 210 without any distortion of the high profile extruded apex components. Alternatively, in cases where an apex and cable bead are employed it is believed preferable to couple the carcass assembly apparatus 200 of Fig. 8B to one or more tire building machines without requiring the carcass material 10A to be rolled onto a spool. This enables the apex of the carcass 10 to be manufactured free of any potential distortions caused by handling and storage.

The above description of the carcass 10 includes all of the elastomeric components required to build the tubeless tire carcass 10 and it is considered to be the best mode of practicing the invention because it is a most efficient method to produce such a tire carcass 10. As previously mentioned, should the tire engineer choose, the apexes 30 could be added at a later stage of building to facilitate the use of different bead constructions such as hexagonal or strap type beads.

Additionally, it is considered within the scope of the invention that the intermediate article of manufacture include one ply 20 and at least two of the components selected from the group of components described above, all having the unique common splice feature as described below.

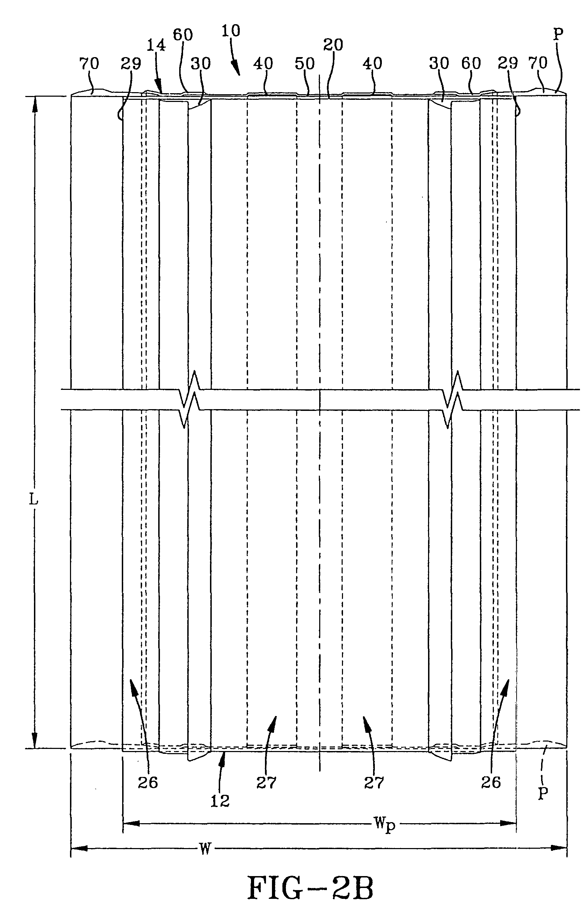

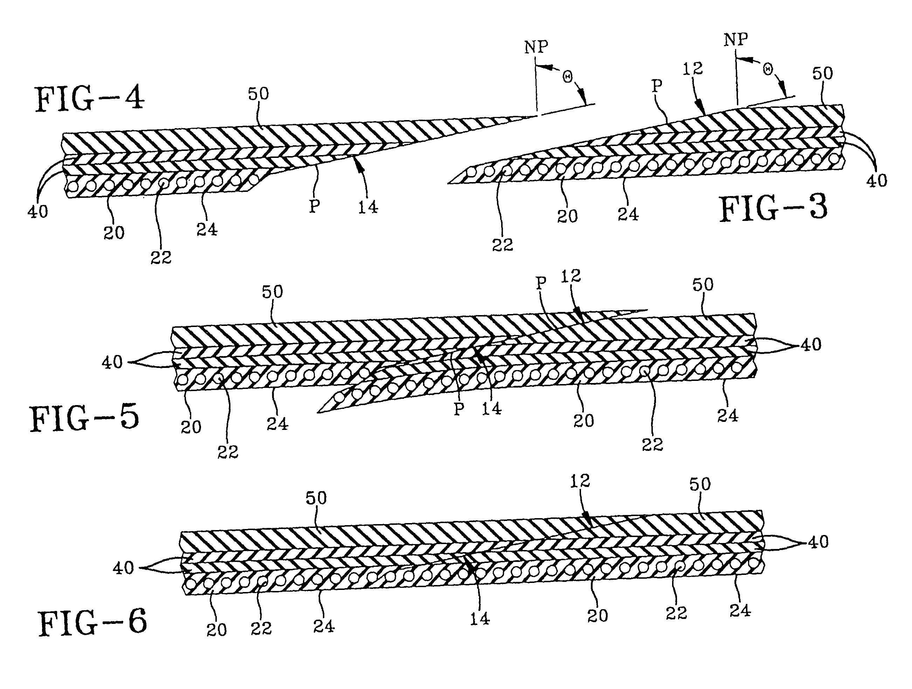

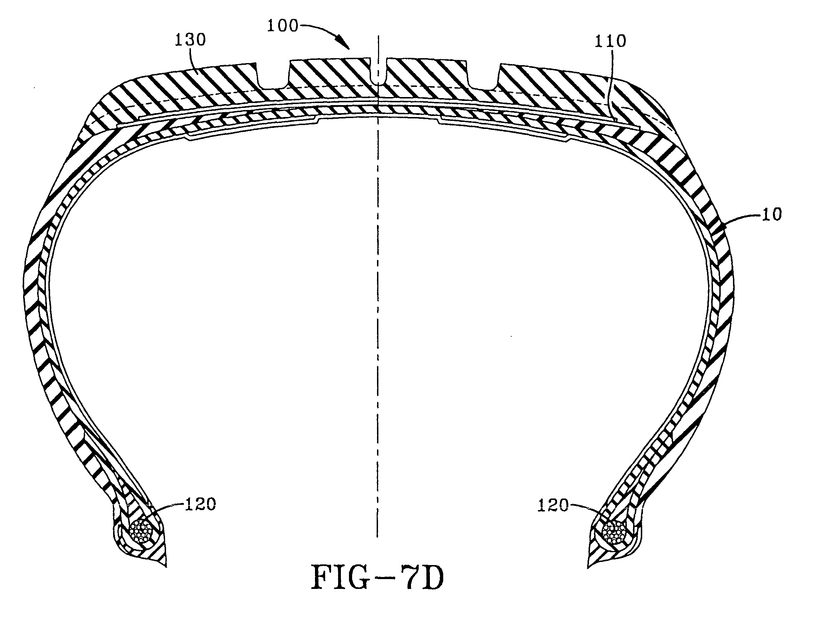

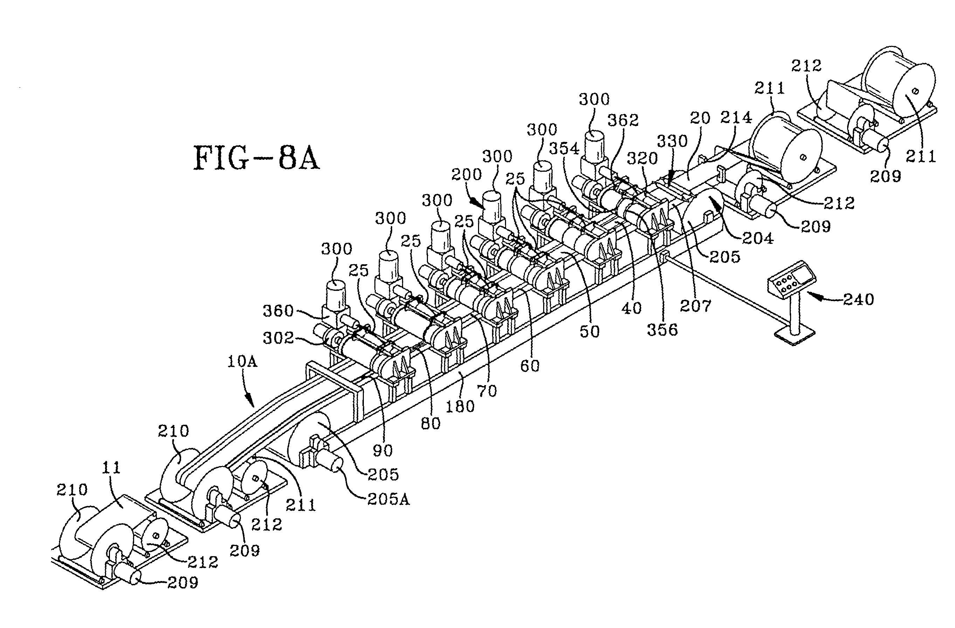

Figs. 2A and 2B depict the first end 12 and second end 14 respectively of the carcass 10 as it exists prior to being formed into a cylindrical shape and spliced at its joined ends 12,14. Both ends 12,14 are cut along an axially or laterally extending substantially straight line path substantially parallel to the cords 22 of the ply 24. The cut surfaces or ends 12,14 deviate slightly at the cords 22 from the substantially flat plane P. This minor deviation occurs when the cutting element bends slightly to pass through the cords without damaging them. the substantially straight line cutting creates a first end or surface area 12 and a second end or surface area 14. The surface areas 12 and 14 (as may best be seen in Figs. 3-6) are inclined at an angle θ less than 90° relative to a normal plane (NP), the normal plane (NP) being perpendicular to the ply 20 and substantially parallel to the cords 22 in the ply 20. In order to achieve sufficiently large surface areas 12,14 for splicing, it is believed desirable to insure that the angle **θ** be greater than 60°. In the preferred embodiment the angle **θ** is about 80°. Some tires have been built having a carcass cut at an angle θ of 82°. This high angle of inclination provides a large surface area of adhesion when the two ends 12,14 are spliced at the building drum as shown in Fig. 5. As shown in Fig. 7A the cut ends 14,16 exhibit fine ribs or ridges 81 and valleys or grooves 82 which are formed when the laminate 10 is cut. These smeared surfaces are believed to further enhance the adhesion of the splice.

The carcass assembly 10 is shown in Fig. 7A wrapped about a building drum 5 and a portion of the carcass is shown prior to being spliced. The carcass ends 12 and 14 have two inclined substantially flat surfaces lying in planes P. The ends 12 and 14 are spliced together along the plane P as shown in Fig. 7B.

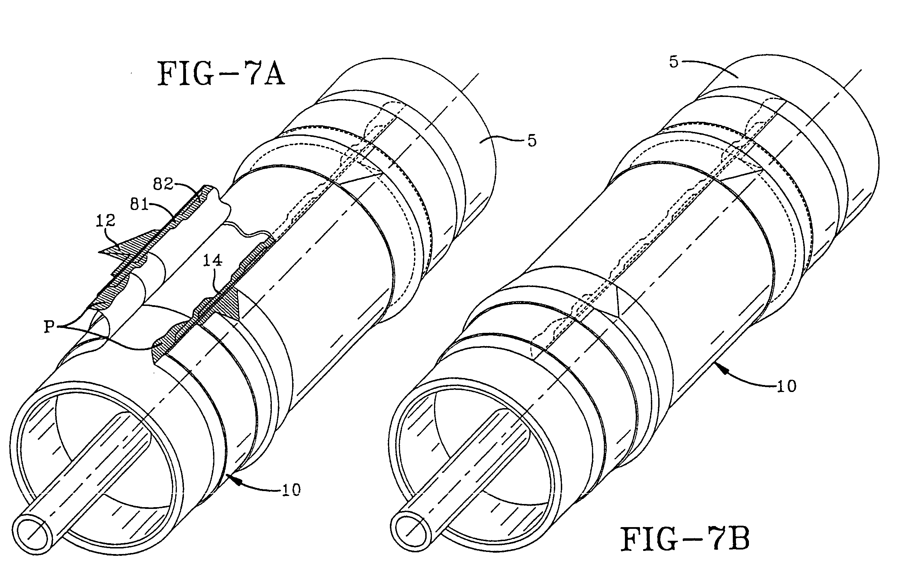

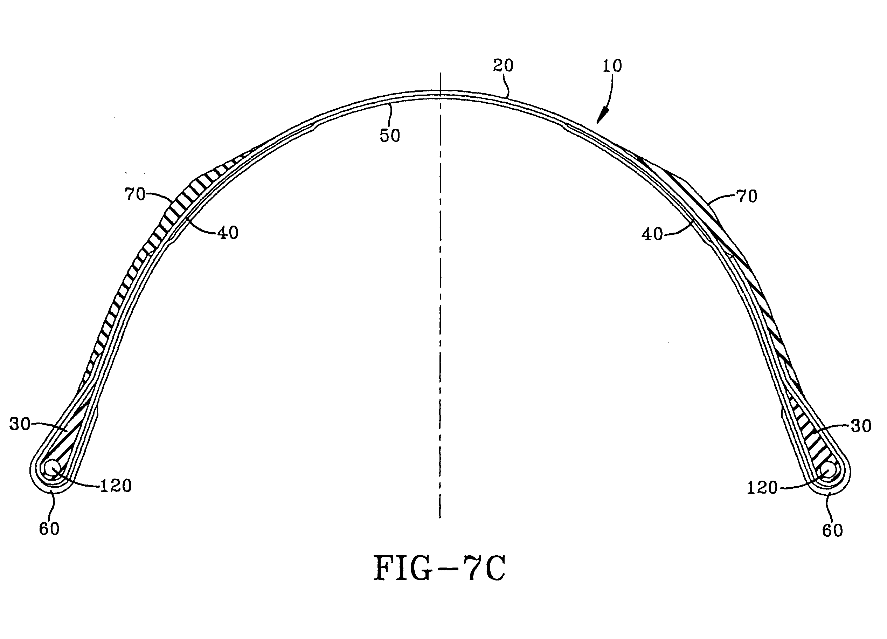

With reference to Figs. 5 and 6 the carcass after being cut to length and wrapped about a cylindrical building drum is spliced. Although the first and second ends have almost identical mating surfaces, it has been empirically discovered that the carcass splice should slightly overlap as shown in the enlarged view of Fig. 6. The preferred overlap is such that at least one cord 22 is radially aligned and preferably two cords are aligned. This feature coupled with the inclined surfaces 12,14 enables the carcass 10 when expanded to stretch precisely at the splice. The resultant effect is that the overlapping cords 22 are pulled back into uniform alignment with the remaining cords 22 in the ply 20. After vulcanization, tires made according to the invention have to be x-rayed, ultrasonically inspected or buffed down to the ply cords in an attempt to visually detect the ply splice. The splice is virtually not detectable to experienced personnel. The cords 22 are uniformly spaced and for all intents and purposes the carcass appears to be spliceless.

In Fig. 7C the carcass is shown in a cross-sectional view after being expanded into a toroidal shape. Prior to expanding the carcass, the annular beads 120 are positioned onto the cylindrical carcass, and the turnup ends and sidewalls are rolled over the bead cores and are stitched to the ply 20. The carcass is then expanded into the toroidal shape as illustrated.

In Fig. 7D a finished tire is shown in cross section. The finished tire 100 when assembled and cured will have the carcass 10, reinforcing belts 110, annular beads 120 and a tread 130. The carcass 10 will have the common end splice. Occasionally, due to the fact that the ply fabric itself has a finite length, the carcass may also exhibit one additional ply lap splice. It is believed desirable when building the finished tire to insure that the carcass 10, the additional plies if required, the reinforcing belts 110 and tread 130 have their splices circumferentially spaced as is the conventional practice.

The invention described above not only enables tires to be more efficiently manufactured but also enables the tires to exhibit far greater uniformity and durability.

Tires 100 built according to the invention were tested for burst strength when compared to the same construction tire conventionally assembled. The experimental tires average burst strength actually increased when compared to conventionally built tires. All else being equal it is believed that the carcass 10 according to the invention is in fact stronger. Uniformity tests indicate that the tires 100 made according to the present invention improved both in ride and vibration related performance.

The radial ply pneumatic tire 100 according to the present invention has a toroidal shape, the tire 100 has a tread 130, at least two belt plies 110 having cord angles oppositely oriented with respect to the equatorial plane of the tire 100. The belt plies are oriented at angles in the range from 17° to 30°. The tire 100 has a carcass 10 having at least one ply with radially-oriented cords and other carcass components, the ply and at least two, preferably all such carcass components having been spliced along a single surface or plane curing construction of the carcass 10 as an intermediate article of manufacture. It is believed preferable that the additional plies, belts and tread have their respective spliced ends joined circumferentially spaced from the carcass 10 splice.

In building radial ply tires it has been determined that the cord angles of adjacent plies in multiple ply tire constructions preferably should be oppositely oriented relative to the equatorial plane. For that reason it is believed desirable to assemble additional plies to the tire carcass in a separate step at the tire building station, when a second or more plies are needed to manufacture the tire. In many tires particularly steel cord reinforced tires, only one ply 20 is required in the manufacture of the finished tire 100. In those cases, the carcass 10 can be reinforced with the bead cores 120, belts 110 and tread 130 for a complete tire 100.

## Claims

1. A cylindrical unvulcanized carcass (10) for a pneumatic tire (100) as an intermediate article of manufacture, the carcass comprising:
a ply (20), the ply having a width, a pair of ends (12,14) the distance between the ends defining the ply length (L), the ply having unvulcanized rubber (24) reinforced with cords (22),
the ends (12,14) being spliced along a substantially flat plane (P), the plane extending through the article across its axial width (W) and being substantially parallel to the cords (22) of the ply (20); characterized by
the cords being oriented at an angle between 65° and 90° relative to the length;
at least two components being attached to the ply (20), the components being selected from one or more of the component types consisting of an apex (30), a chafer (60), a liner (50), a sidewall (70), a whitewall strip (80), a cover strip (90), and a gum shoulder strip (40); and
the ply and the components having common ends (12,14), the components being laminated to one another.

2. The carcass of claim 1, wherein the flat plane (P) is inclined at an angle θ, θ being less than 90° and greater than 60° relative to a plane (NP) passing through the ply and extending parallel to the cords (22) and perpendicular to the ply (20).

3. The carcass of claim 2 wherein θ is about 80°.

4. The carcass of claim 1, wherein the components comprise one liner (50) and two sidewalls (70).

5. An assembled and cured radial ply pneumatic tire (100), having a toroidal shape,
the tire having a tread (130), at least two belt plies (110) having cord angles oppositely oriented with respect to an equatorial plane of the tire and at angles in the range from 17° to 30°,
the tire being characterized by the carcass (10) according to claim 1.

6. The tire of claim 5 having a second or more carcass plies.

7. The tire of claim 6, wherein the flat plane (P) is inclined at an angle θ, θ being less than 90° and greater than 60° relative to a plane (NP) passing through the ply and extending parallel to the cords (22) and perpendicular to the ply (20).

8. The tire of claim 7, wherein θ is about 80°.

9. The tire of claim 6, wherein the components attached to the ply comprise one liner (50) and two sidewalls (70).

10. The tire of claim 9 wherein θ is about 80°.

## Patentansprüche

1. Zylindrische, unvulkanisierte Karkasse (10) für einen Luftreifen (100) als Herstellungszwischenprodukt, wobei die Karkasse
eine Lage (20) umfaßt, wobei die Lage eine Breite und zwei Enden (12, 14) aufweist, wobei der Abstand zwischen den Enden die Lagenlänge (L) festlegt, und die Lage mit Corden (22) verstärkten, unvulkanisierten Kautschuk (24) aufweist, wobei
die Enden (12, 14) entlang einer im wesentlichen flachen Ebene (P) gespleißt sind, wobei die Ebene sich durch das Produkt quer über dessen axiale Breite (W) hinweg erstreckt und im wesentlichen parallel zu den Corden (22) der Lage (20) liegt,
dadurch gekennzeichnet, daß
die Corde unter einem Winkel zwischen 65° und 90° in bezug auf die Länge orientiert sind,
mindestens zwei Bauteile an der Lage (20) angebracht sind, wobei die Bauteile aus einem oder mehreren der Bauteiltypen ausgewählt sind, die aus einem Kernreiter (30), einem Wulstband (60), einem Liner (50), einer Seitenwand (70), einem Weißwandstreifen (80), einem Deckstreifen (90) und einem Gummischulterstreifen (40) bestehen, und
die Lage und die Bauteile gemeinsame Enden (12, 14) aufweisen, wobei die Bauteile aneinanderlaminiert sind.

2. Karkasse nach Anspruch 1, wobei die flache Ebene (P) unter einem Winkel θ, wobei θ kleiner als 90° und größer als 60° ist, in bezug auf eine Ebene (NP) geneigt ist, die durch die Lage verläuft und sich parallel zu den Corden (22) und senkrecht zur Lage (20) erstreckt.

3. Karkasse nach Anspruch 2, wobei θ ungefähr 80° beträgt:.

4. Karkasse nach Anspruch 1, wobei die Bauteile einen Liner (50) und zwei Seitenwände (70) umfassen.

5. Zusammengebauter und vulkanisierter Radialluftreifen (100) mit einer Torusform,
wobei der Reifen einen Laufstreifen (130) und mindestens zwei Gürtellagen (110) mit in bezug auf eine Äquatorialebene des Reifens und
unter Winkeln im Bereich zwischen 17° und 30° entgegengesetzt orientierten Cordwinkeln aufweist, wobei
der Reifen durch die Karkasse (10) nach Anspruch 1 gekennzeichnet ist.

6. Reifen nach Anspruch 5, der eine zweite oder mehr Karkaßlagen aufweist.

7. Reifen nach Anspruch 6, wobei die flache Ebene (P) unter einem Winkel θ, wobei θ kleiner als 90° und größer als 60° ist, in bezug auf eine Ebene (NP) geneigt ist, die durch die Lage verläuft und sich parallel zu den Corden (22) und senkrecht zur Lage (20) erstreckt.

8. Reifen nach Anspruch 7, wobei θ ungefähr 80° beträgt.

9. Reifen nach Anspruch 6, wobei die an der Lage angebrachten Bauteile einen Liner (50) und zwei Seitenwände (70) umfassen.

10. Reifen nach Anspruch 9, wobei θ ungefähr 80° beträgt.

## Revendications

1. Carcasse cylindrique non vulcanisée (10) pour un bandage pneumatique (100) sous la forme d'un article de fabrication intermédiaire, la carcasse comprenant :
une nappe (20), la nappe possédant une largeur, une paire d'extrémités (12, 14), la distance entre les extrémités définissant la longueur de nappe (L), la nappe possédant du caoutchouc non vulcanisé (24) renforcé avec des câblés (22),
les extrémités (12, 14) étant épissées le long d'un plan (P) essentiellement plat, le plan s'étendant à travers l'article sur sa largeur axiale (W) et étant essentiellement parallèle aux câblés (22) de la nappe (20);
caractérisée par le fait que
les câblés sont orientés en formant un angle entre 65° et 90° par rapport à la longueur;
au moins deux composants sont fixés à la nappe (20), les composants étant sélectionnés parmi un ou plusieurs types de composants constitués par un bourrage sur tringle (30), une bandelette-talon (60), un calandrage intérieur (50), un flanc (70), une bande de flanc blanc (80), une bande de recouvrement (90) et une bande d'épaulement de gomme (40); et
la nappe et les composants possèdent des extrémités communes (12, 14), les composants étant stratifiés les uns aux autres.

2. Carcasse selon la revendication 1, dans laquelle le plan plat (P) est incliné en formant un angle θ, θ étant inférieur à 90°, mais supérieur 60°, par rapport à un plan (NP) passant par la nappe et s'étendant parallèlement au câblé (22) et perpendiculairement à la nappe (20).

3. Carcasse selon la revendication 2, dans laquelle θ représente environ 80°.

4. Carcasse selon la revendication 1, dans laquelle les composants comprennent un calandrage intérieur (50) et deux flancs (70).

5. Bandage pneumatique à nappe radiale (100) assemblé et vulcanisé possédant une forme toroïdale, le pneumatique possédant une bande de roulement (130), au moins deux nappes de ceinture (110) possédant des câblés formant des angles d'orientation opposée par rapport à celle du plan équatorial du pneumatique, les angles s'élevant dans le domaine de 17° à 30°, le pneumatique étant caractérisé par la carcasse (10) selon la revendication (1).

6. Pneumatique selon la revendication 5 possédant une seconde nappe de carcasse ou plusieurs nappes de carcasse.

7. Pneumatique selon la revendication 6, dans lequel le plan plat (P) est incliné en formant un angle θ, θ étant inférieur à 90° et supérieur à 60°, par rapport à un plan (NP) passant par la nappe et s'étendant parallèlement aux câblés (22) et perpendiculairement à la nappe (20).

8. Pneumatique selon la revendication 7, dans lequel θ représente environ 80°.

9. Pneumatique selon la revendication 6, dans lequel les composants fixés à la nappe comprennent un calandrage intérieur (50) et deux flancs (70).

10. Pneumatique selon la revendication 9, dans lequel θ représente environ 80°.
